# EUROPEAN PATENT SPECIFICATION

(11) **EP 1 868 258 B1**
(45) Date of publication and mention of the grant of the patent: **02.05.2012**
(21) Application number: 07109536.8
(22) Date of filing: 04.06.2007
(51) Int. Cl.: H01M 4/86, H01M 8/02

(54) **A membrane-electrode assembly for a fuel cell and a fuel cell system including the same**
Eine Membran-Elektroden Einheit für eine Brennstoffzelle und diese enthaltenmdes Brennstoffzellensystem
Ensemble Membrane Électrode pour des piles à combustible et système de piles à combustible incluant celle-ci

(30) Priority: 16.06.2006 KR 20060054450
(43) Date of publication of application: 19.12.2007
(73) Proprietor: Samsung SDI Co., Ltd., Gyeonggi-do (KR)
(72) Inventor: Son, In-Hyuk, Kyunggi-do (KR); Han, Sang-II, Kyunggi-do (KR)
(74) Representative: Grey, Ian Michael

(56) References cited:
- US-A1- 2004 086 775
- US-A1- 2005 260 484
- US-B1- 6 183 898

## Description

A fuel cell is a power generation system for producing electrical energy through an electrochemical redox reaction of an oxidant and hydrogen in a hydrocarbon-based material such as methanol, ethanol, or natural gas. A polymer electrolyte fuel cell is a clean energy source that is capable of replacing fossil fuels. It provides high power density and energy conversion efficiency, is operable at room temperature, and is compact and tightly sealable. Therefore, it can be applicable to a wide array of fields such as non-polluting automobiles, and electricity generation systems and/or portable power sources for mobile equipment, military equipment, and the like.

Representative exemplary fuel cells include a polymer electrolyte membrane fuel cell (PEMFC) and a direct oxidation fuel cell (DOFC). The direct oxidation fuel cell includes a direct methanol fuel cell that uses methanol as a fuel.

The polymer electrolyte fuel cell provides high energy density and high power, but it requires careful handling of hydrogen gas (or hydrogen-rich gas) and accessories such as a fuel reforming processor for reforming methane or methanol, natural gas, and the like in order to produce the hydrogen (or hydrogen-rich gas) as a fuel for the PEMFC.

In the above-mentioned fuel cell systems, a stack that generates electricity includes several to scores of unit cells stacked adjacent to one another, and each unit cell is formed of a membrane-electrode assembly (MEA) and a separator (also referred to as a bipolar plate). The membrane-electrode assembly is composed of an anode (also referred to as a "fuel electrode" or an "oxidation electrode") and a cathode (also referred to as an "air electrode" or a "reduction electrode") that are separated by a polymer electrolyte membrane.

A fuel is supplied to the anode and adsorbed on catalysts of the anode, and the fuel is oxidized to produce protons and electrons. The electrons are transferred into the cathode via an out-circuit, and the protons are transferred into the cathode through the polymer electrolyte membrane. In addition, an oxidant is supplied to the cathode, and then the oxidant, protons, and electrons react with each other on catalysts of the cathode to produce electricity, along with water.

The present invention seeks to provide a membrane-electrode assembly for a fuel cell that can improve electro-conductivity and catalytic activity.

Another aspect of the present invention provides a high power fuel cell system that includes the membrane-electrode assembly.

It is known from US2005/0260484 A1 to provide a membrane-electrode assembly for a fuel cell, the membrane-electrode assembly comprising a cathode and an anode facing each other, each of the cathode and the anode comprising an electrode substrate and a catalyst layer disposed on the electrode substrate and a polymer electrolyte membrane interposed between the anode and the cathode, wherein at least one of the electrode substrate of the anode or the electrode substrate of the cathode comprises a layer of gold disposed thereon.

A membrane-electrode assembly for a fuel cell is characterised in that the layer of gold has a thickness ranging from 5µm to 10µm.

According to another embodiment of the present invention, a fuel cell system includes an electricity generating element, a fuel supplier for supplying a fuel to the electricity generating element, and an oxidant supplier for supplying an oxidant to the electricity generating element. The electricity generating element includes the membrane-electrode assembly, and is adapted to generate electricity through fuel oxidation and oxidant reduction reactions.

The accompanying drawings, together with the specification, illustrate exemplary embodiments of the present invention, and, together with the description, serve to explain the principles of the present invention.
FIGs. 1A, 1B, 1C, and 1D are schematic diagrams showing positions of a metal layer in a membrane-electrode assembly according to embodiments of the present invention.
FIG. 2 is a schematic diagram showing a structure of a fuel cell system according to one embodiment of the present invention.
FIG. 3A is a graph showing voltage-current density characteristics of respective fuel cell systems according to Example 4 and Comparative Example 1, as measured at 50°C, 60°C, and 70°C.
FIG. 3B is a graph showing power densities of the respective fuel cell systems according to Example 4 and Comparative Example 1, as measured at 50°C, 60°C, and 70°C.
FIG. 4A is a graph showing voltage-current density characteristics of respective fuel cell systems according to Example 5 and Comparative Example 1, as measured at 50°C, 60°C, and 70°C.
FIG. 4B is a graph showing power densities of the respective fuel cell systems according to Example 5 and Comparative Example 1, as measured at 50°C, 60°C, and 70°C.

In the following detailed description, certain exemplary embodiments of the present invention are shown and described, by way of illustration and example only.

Recently, power improvement of fuel cells has been researched. For example, a membrane-electrode assembly (MEA) that is formed by inserting a gold mesh between a catalyst layer and an electrode substrate has been reported to increase power (Journal of Power Sources 128, 2004, P.119-124). However, it also had increased mass transfer resistances when a fuel and an oxidant were transferred.

Embodiments of the present invention provide a membrane-electrode assembly having no (or substantially no) mass transfer resistances but producing high power by using electro-conductivity of gold.

A membrane-electrode assembly in an embodiment of the present invention includes an anode and a cathode facing each other and a polymer electrolyte membrane interposed therebetween.

The anode and the cathode each include an electrode substrate and a catalyst layer formed (or located) thereon. At least one of the electrode substrate of the anode or the electrode substrate of the cathode includes a gold layer formed (or located) thereon.

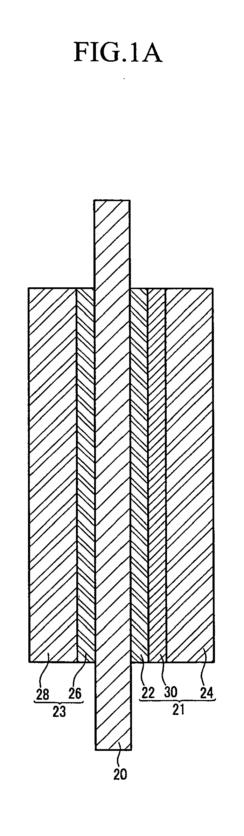

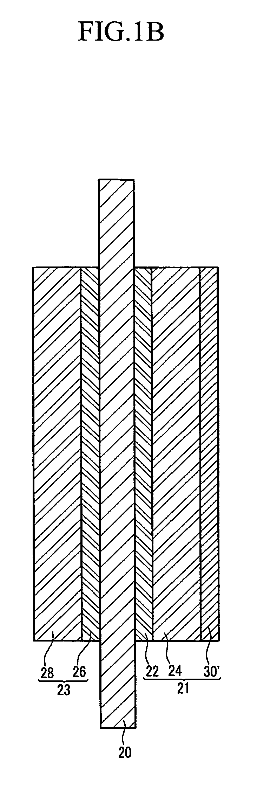

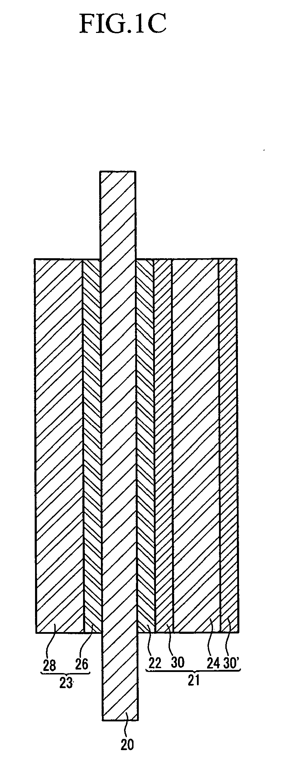

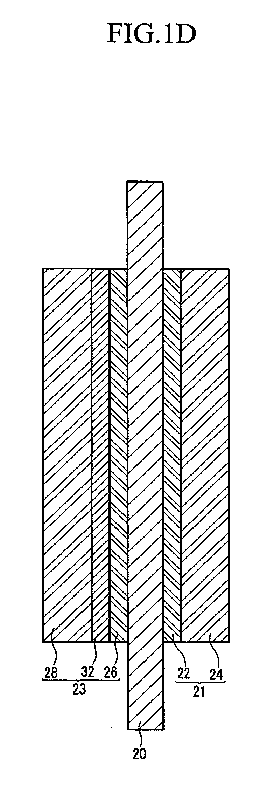

The gold layer may be formed on one side of the electrode substrate or on both sides of the electrode substrate, depending on the electrode. Referring to FIGs. 1A, 1B, 1C, and 1D, a membrane-electrode assembly of embodiments of the present invention is illustrated. As shown in FIGs. 1A to 1D, a membrane-electrode assembly for a fuel cell includes a polymer electrolyte membrane 20 and an anode 21 and a cathode 23 positioned at respective sides of the polymer electrolyte membrane 20. The anode 21 includes a catalyst layer 22 and an electrode substrate 24, and the cathode 23 includes a catalyst layer 26 and an electrode substrate 28.

FIGs. 1A to 1D show positions of a metal layer in the anode 21 or the cathode 23.

As shown in FIG. 1A, the anode 21 includes a gold layer 30 located between the catalyst layer 22 and the electrode substrate 24, and directly contacting the catalyst layer 22. As shown in FIG. 1B, the electrode substrate 24 is positioned between the catalyst layer 22 and a gold layer 30', such that the catalyst layer cannot contact the gold layer 30'. In addition, as shown in FIG. 1C, a gold layer may be positioned at both sides of the electrode substrate 24. Herein, gold layers 30 and 30' are positioned at respective sides of the electrode substrate 24, and the catalyst layer 22 may be positioned at either of the gold layers 30 and 30'. As will be described, regardless of the position of the gold layers 30 and 30' in an anode, the gold layers 30 and 30' can decrease resistance against fuel transfer, thereby improving catalytic efficiency.

FIG. 1D shows a position of a metal layer in a cathode. In the cathode 23, a gold layer 32 is positioned between the electrode substrate 28 and the catalyst layer 26, and in contact with the catalyst layer 26, thereby decreasing resistance against transfer of an oxidant.

As described earlier, a gold layer may be formed on an anode substrate rather than on a cathode substrate.

The electrode substrate of either the anode or the cathode may include gold in an amount ranging from about 0.01 to about 5 wt%. In one embodiment, the electrode substrate of either the anode or the cathode includes gold in an amount ranging from about 0.1 to about 1 wt%. When the gold is included in an amount of less than about 0.01 wt%, the gold has little effect on decreasing resistance, and, when it is present in an amount of more than about 5 wt%, the catalyst layer can be peeled off or there may be a problem in treating the electrode substrate with a water repellent agent.

In addition, the gold layer can have different thicknesses, between 5 µm and 10µm, depending on a corresponding position of a coating layer (e.g., a catalyst layer). Furthermore, a first gold layer and a second gold layer may be disposed on respective sides of an electrode substrate. In one embodiment, the first gold layer is in contact with an anode catalyst layer, and/or at least one of the first gold layer or the second gold layer has a thickness from 5 µm to 10 µm. In addition, when a metal layer is positioned to not contact a cathode catalyst layer, it may have a thickness from 5µm to 10µm.

When a gold layer has a thickness of less than 5µm, it has little effect on decreasing resistance, and, when it has a thickness exceeding a corresponding one of the aforementioned maximum values, a fuel or an oxidant transfer, i.e., a mass transfer, may encounter increased resistance.

The gold layer can be applied by a wet coating and/or a physical coating method. The wet coating method is performed by using a composition for forming a gold layer. The composition includes a metal and a solvent. The solvent may include an alcohol such as methanol, ethanol, and/or isopropyl alcohol.

The physical coating method may include chemical vapor deposition (CVD), plasma enforced chemical vapor deposition (PECVD), and/or sputtering.

In one embodiment, the substrates are conductive substrates formed from a material such as carbon paper, carbon cloth, carbon felt, a metal cloth (a porous film composed of metal fiber or a metal film disposed on a surface of a cloth composed of polymer fibers), or combinations thereof. However, the electrode substrate is not limited thereto.

The electrode substrates may be treated with a fluorine-based resin to become water-repellent, so as to prevent (or reduce) deterioration of reactant diffusion efficiency due to water generated during fuel cell operation. The fluorine-based resin includes polytetrafluoroethylene, polyvinylidene fluoride, polyhexafluoropropylene, polyperfluoroalkylvinylether, polyperfluorosulfonylfluoride alkoxyvinyl ether, fluorinated ethylene propylene, polychlorotrifluoro ethylene, or copolymers thereof.

A micro-porous layer (MPL) can be positioned between the electrode substrate and the catalyst layer to increase reactant diffusion effects. In general, the microporous layer may include, but is not limited to, a small-sized conductive powder such as a carbon powder, carbon black, acetylene black, activated carbon, carbon fiber, fullerene, nano-carbon, or combinations thereof. The nano-carbon may include a material such as carbon nanotubes, carbon nanofibers, carbon nanowire, carbon nanohorns, carbon nanorings, or combinations thereof.

The microporous layer is formed by applying a coat of a composition including a conductive powder, a binder resin, and a solvent onto the electrode substrate. The binder resin may include, but is not limited to, polytetrafluoroethylene, polyvinylidenefluoride, polyhexafluoropropylene, polyperfluoro alkylvinylether, polyperfluorosulfonylfluoride alkoxyvinyl ether, polyvinylalcohol, celluloseacetate, or combinations thereof. The solvent may include, but is not limited to, an alcohol such as ethanol, isopropyl alcohol, n-propyl alcohol, or butyl alcohol; water; dimethylacetamide; dimethylsulfoxide; and/or N-methylpyrrolidone. A method of applying the coat may include, but is not limited to, screen printing, spray coating, and/or doctor blade methods, depending on a viscosity of the composition.

The electrode substrate coated with the electrically conductive gold layer has a decreased electric resistance at an interface between the catalyst layer and the electrode substrate and between the electrode substrate and transferred materials. The electrically conductive metal layer also endows catalytic synergism and provides a high power fuel cell due to an increase of contact areas between electrically conductive gold and catalysts.

The respective catalyst layers of the anode and the cathode of the membrane-electrode assembly include platinum, ruthenium, osmium, platinum-ruthenium alloys, platinum-osmium alloys, platinum-palladium alloys, platinum-M alloys, or combinations thereof, wherein M includes at least one transition element selected from the group consisting of Ga, Ti, V, Cr, Mn, Fe, Co, Ni, Cu, Zn, Sn, Mo, W, Rh, Ru, and combinations thereof. In more detail, the respective catalyst layers include at least one material selected from the group consisting of Pt, Pt/Ru, Pt/W, Pt/Ni, Pt/Sn, Pt/Mo, Pt/Pd, Pt/Fe, Pt/Cr, Pt/Co, Pt/Ru/W, Pt/Ru/Mo, Pt/Ru/V, Pt/Fe/Co, Pt/Ru/Rh/Ni, Pt/Ru/Sn/W, and combinations thereof.

Such a catalyst layer can be supported on a carbon carrier, or not supported as a black type. Suitable carriers include a carbon-based material such as graphite, denka black, ketjen black, acetylene black, activated carbon, carbon nanotubes, carbon nanofiber, and/or carbon nanowire, and/or inorganic material particulates such as alumina, silica, zirconia, and/or titania. In one embodiment, a carrier includes a carbon-based material.

The polymer electrolyte membrane 20 of the membrane-electrode assembly can include any suitable proton-conductive polymer resin that is generally used in a polymer electrolyte membrane of a fuel cell. The proton-conductive polymer may be a polymer resin having at its side chain a cation exchange group selected from the group consisting of a sulfonic acid group, a carboxylic acid group, a phosphoric acid group, a phosphonic acid group, and derivatives thereof.

The proton-conductive polymer may include at least one material selected from the group consisting of fluoro-based polymers, benzimidazole-based polymers, polyimide-based polymers, polyetherimide-based polymers, polyphenylenesulfide-based polymers, polysulfone-based polymers, polyethersulfone-based polymers, polyetherketone-based polymers, polyether-etherketone-based polymers, and/or polyphenylquinoxaline-based polymers. In one embodiment, the polymer electrolyte membrane includes proton conductive polymers selected from the group consisting of poly(perfluorosulfonic acid) (NAFIONTM), poly(perfluorocarboxylic acid), a copolymer of tetrafluoroethylene and fluorovinylether having a sulfonic acid group, defluorinated polyetherketone sulfide, aryl ketone, poly(2,2'-(m-phenylene)-5,5'-bibenzimidazole), poly(2,5-benzimidazole), and combinations thereof. Hydrogens (H) of proton-conductive groups of the proton-conductive polymer can be substituted with Na, K, Li, Cs, tetrabutylammonium, or combinations thereof. When an H in an ionic exchange group of a terminal end of the proton-conductive polymer side is substituted with Na or tetrabutylammonium, NaOH or tetrabutyl ammonium hydroxide may be used, respectively. When the H is substituted with K, Li, or Cs, any suitable compounds corresponding to the respective substitutions may be used.

One or more of the membrane-electrode assemblies described above can be applicable to a polymer electrolyte fuel cell system or a direct oxidation fuel cell system. In one embodiment, one or more of the membrane-electrode assemblies can be applied to a direct oxidation fuel cell.

In a fuel cell system including a membrane-electrode assembly of an embodiment of the present invention, an electricity generating element generates electricity through oxidation of a fuel and reduction of an oxidant.

A fuel supplier supplies the fuel to the electricity generating element. The fuel includes liquid or gaseous hydrogen, or a hydrocarbon-based fuel. In one embodiment, the fuel cell system is a direct oxidation fuel cell system using a hydrocarbon fuel. The hydrocarbon fuel includes methanol, ethanol, propanol, butanol, and/or natural gas.

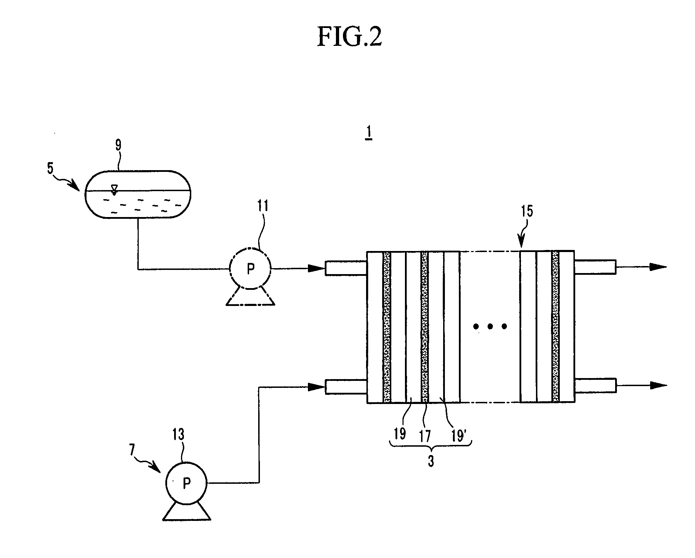

FIG. 2 shows a schematic structure of a fuel cell system that will be described in more detail as follows. FIG. 2 illustrates a fuel cell system 1 wherein a fuel and an oxidant are respectively provided to an electricity generating element 3 through pumps 11 and 13. In the present invention, the fuel cell system may have other suitable structures and is not limited to the above described structure. By way of example, the fuel cell system of the present invention may alternatively include a structure wherein a fuel and an oxidant are provided in a diffusion manner.

The fuel cell system 1 includes at least one electricity generating element 3 that generates electrical energy through an electrochemical reaction between a fuel and an oxidant, a fuel supplier 5 for supplying the fuel to the electricity generating element 3, and an oxidant supplier 7 for supplying the oxidant to the electricity generating element 3.

In addition, the fuel supplier 5 is equipped with a tank 9, which stores fuel, and a fuel pump 11, which is connected therewith. The fuel pump 11 supplies the fuel stored in the tank 9 with a pumping power (which may be predetermined).

The oxidant supplier 7, which supplies the electricity generating element 3 with the oxidant, is equipped with at least one pump 13 for supplying the oxidant with a pumping power (which may be predetermined).

The electricity generating element 3 includes a membrane-electrode assembly 17 that oxidizes hydrogen or a fuel and reduces an oxidant, separators 19 and 19' that are respectively positioned at opposite sides of the membrane-electrode assembly 17 and that supply hydrogen or a fuel, and an oxidant. A stack 15 includes one or more electricity generating elements 3 stacked adjacent to one another.

Some of the following examples illustrate embodiments of the present invention in more detail. However, it will be understood that not all of these examples fall within the scope of the present invention.

### Example 1

A cathode was prepared by applying a coat of gold that is 5µm thick on one side of a carbon paper substrate (SGL GDL 10DA) through sputtering.

The cathode substrate was coated on its other side with a catalyst composition. 88 wt% of a Pt black catalyst (manufactured by Johnson Matthey) and 12 wt% of Nafion/H2O/2-propanol (Solution Technology Inc.) in a concentration of 5 wt% as a binder were prepared to form the cathode. The catalyst was loaded at 4mg/cm2 on the cathode.

Next, an anode was prepared by coating a carbon paper substrate (SGL GDL 25BC) with a catalyst composition. 88 wt% of a Pt-Ru black catalyst (Johnson Matthey) and Nafion/H2O/2-propanol (Solution Technology Inc.) in a concentration of 5 wt% as a binder were prepared to form the anode. The catalyst was loaded at 5mg/cm² on the anode.

Then, a membrane-electrode assembly was prepared by using the prepared anode and cathode and a commercial NAFIONTM 115 (perfluorosulfonate) polymer electrolyte membrane.

### Example 2

A cathode was prepared by using a method substantially similar to that in Example 1, except that a cathode catalyst composition was coated with a gold coating layer.

### Example 3

A cathode was prepared by using a method substantially similar to that in Example 1, except that gold was sputtered on both sides of a carbon paper substrate.

### Comparative Example 1

A cathode and an anode were prepared by using methods substantially similar to those in Example 1, except that a carbon paper substrate included no gold coating layer.

Then, unit fuel cells were fabricated by using the respective cathodes and anodes according to Examples 1 to 3 and Comparative Example 1 and provided with 1M of methanol for operation. Power densities of the fuel cells were respectively measured at 0.45V, 0.4V, and 0.35V and at temperatures of 50°C, 60°C, and 70°C. The results are provided in the following Table 1.

**Table 1**

| Power density (mW/cm²) | 0.45V | | | 0.4V | | | 0.35V | | |
|---|---|---|---|---|---|---|---|---|---|
| | 50°C | 60°C | 70°C | 50°C | 60°C | 70°C | 50°C | 60°C | 70°C |
| Comparative Example 1 | 45 | 64 | 85 | 65 | 87 | 112 | 80 | 105 | 131 |
| Example 1 | 40 | 56 | 73 | 56 | 73 | 91 | 70 | 80 | 101 |
| Example 2 | 46 | 67 | 89 | 66 | 85 | 109 | 77 | 101 | 125 |
| Example 3 | 36 | 52 | 70 | 53 | 71 | 90 | 65 | 87 | 98 |

As shown in Table 1, the fuel cell of Example 2 including a gold coating layer in contact with a cathode catalyst layer exhibited higher power densities than that of Comparative Example 1. In addition, the fuel cell of Example 2 was more effective than that of Example 3, in which a gold coating layer was formed at both sides of a substrate, and also that of Example 1, in which a gold coating layer did not contact a cathode catalyst layer. Accordingly, it may be concluded that a fuel cell exhibits different power densities depending on the position of a gold coating layer.

### Example 4

An anode was prepared by sputtering a 5µm-thick gold layer on one side of a carbon paper electrode substrate (SGL GDL 25BC).

The anode substrate was coated on its other side with a catalyst composition. 88 wt% of a Pt-Ru black (Johnson Matthey) catalyst and 12 wt% of Nafion/H₂O/2-propanol (Solution Technology Inc.) in a concentration of 5 wt% as a binder were prepared to form the anode. The catalyst was loaded at 5mg/cm² on the anode.

In addition, a cathode was prepared by coating a carbon paper electrode substrate (SGL GDL 10DA) with a catalyst composition. 88 wt% of a Pt black (Johnson Matthey) catalyst and 12 wt% of Nafion/H₂O/2-propanol (Solution Technology Inc.) in a concentration of 5 wt% as a binder were prepared to form the cathode. The catalyst was loaded at 4mg/cm² on the cathode.

Then, a membrane-electrode assembly was prepared by using the prepared anode and cathode and a commercial NAFION^{™} 115 (perfluorosulfonate) polymer electrolyte membrane.

### Example 5

A fuel cell was fabricated by using a method substantially similar to that in Example 4, except that an anode was prepared by coating a catalyst composition on a gold coating layer.

### Example 6

A fuel cell was fabricated by using a method substantially similar to that in Example 1, except that both sides of a carbon paper substrate for an anode were sputtered with gold.

Then, the unit fuel cells (or unit cells) respectively fabricated according to Examples 4 to 6 were provided with 1M of methanol for operation. Their respective power densities were measured at 0.45V, 0.4V, and 0.35V at temperatures of 50°C, 60°C, and 70°C. The results are provided in the following Table 2. In addition, the results of the fuel cell according to Comparative Example 1 are provided for comparison.

**Table 2**

| Power density (mW/cm²) | 0.45V | | | 0.4V | | | 0.35V | | |
|---|---|---|---|---|---|---|---|---|---|
| | 50°C | 60°C | 70°C | 50°C | 60°C | 70°C | 50°C | 60°C | 70°C |
| Comparative Example 1 | 45 | 64 | 85 | 65 | 87 | 112 | 80 | 105 | 131 |
| Example 4 | 59 | 76 | 95 | 81 | 104 | 128 | 98 | 126 | 154 |
| Example 5 | 63 | 81 | 104 | 76 | 100 | 128 | 84 | 109 | 140 |
| Example 6 | 50 | 70 | 91 | 72 | 95 | 115 | 81 | 104 | 132 |

As shown in Table 2, the fuel cells of Examples 4 to 6, in which an anode included a gold coating layer, exhibited higher power densities than that of Comparative Example 1. Accordingly, when an anode includes a gold coating layer, increased power density can result regardless of the position of the gold coating layer. However, when a gold coating layer is formed on only one side of a substrate rather than on both sides, it can be more effective at low and high voltages (e.g., 0.35V, 0.4V, 0.45V).

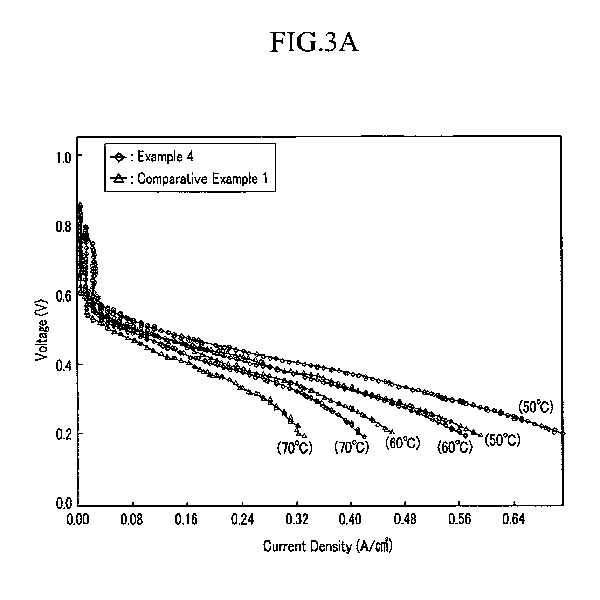

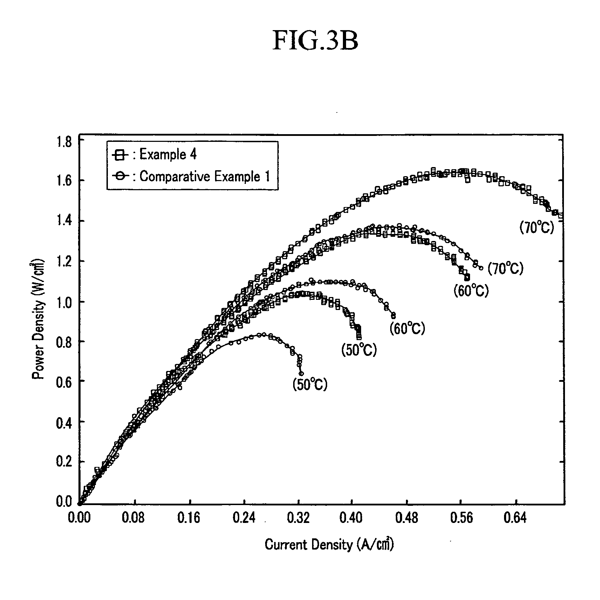

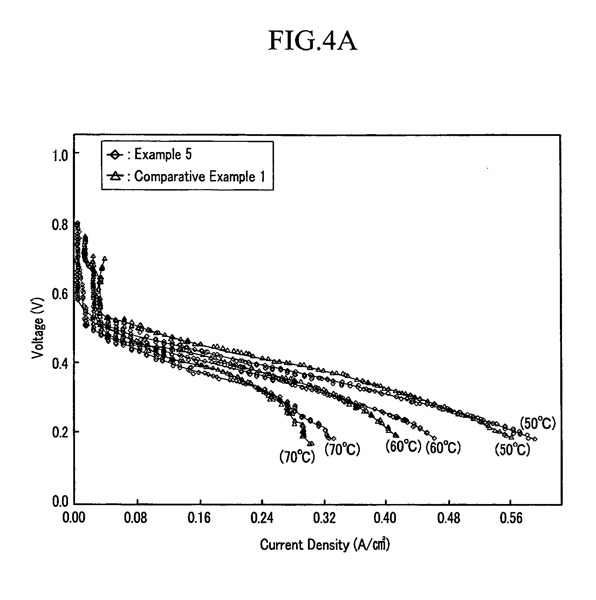

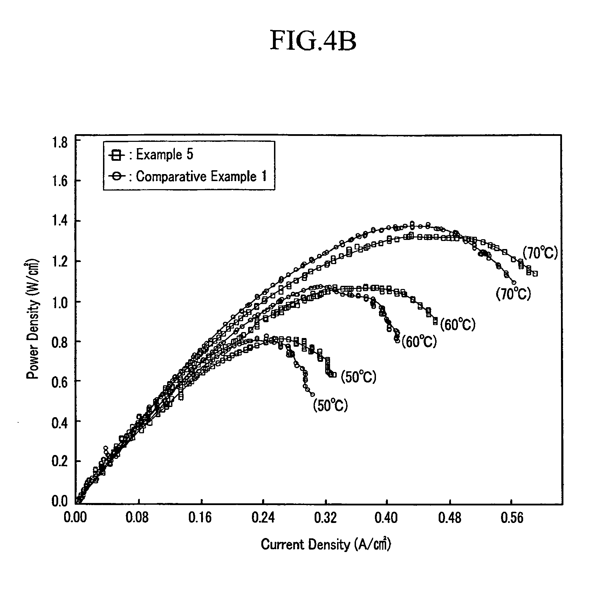

FIG. 3A shows voltage-current density characteristics of respective fuel cells according to Example 4 and Comparative Example 1, as measured at 50°C, 60°C, and 70°C, and FIG. 3B shows their respective power densities. FIG. 4A shows voltage-current density characteristics of respective fuel cells of Example 5 and Comparative Example 1, as measured at 50°C, 60°C, and 70°C, and FIG. 4B shows their respective power densities. As shown in FIGs. 3B and 4B, the fuel cells of Examples 4 and 5 exhibited higher power densities than that of Comparative Example 1, particularly at a low temperature.

### Example 7

A fuel cell was fabricated by using a method substantially similar to that in Example 4, except that the gold coating layer was configured to be 1µm thick.

### Example 8

A fuel cell was fabricated by using a method substantially similar to that in Example 4, except that the gold coating layer was configured to be 10µm thick.

### Example 9

A fuel cell was fabricated by using a method substantially similar to that in Example 4, except that the gold coating layer was configured to be 20µm thick.

Then, the respective fuel cells according to Examples 7 to 9 were provided with 1M of methanol for operating. Their power densities were measured at 0.45V, 0.4V, and 0.35V at temperatures of 50°C, 60°C, and 70°C. The results are provided in Table 3. The results of Comparative Example 1 and Example 4 are also provided in the same Table 3 for comparison.

**Table 3**

| Power density (mW/cm²) | 0.45V | | | 0.4V | | | 0.35V | | |
|---|---|---|---|---|---|---|---|---|---|
| | 50°C | 60°C | 70°C | 50°C | 60°C | 70°C | 50°C | 60°C | 70°C |
| Comparative Example 1 | 45 | 64 | 85 | 65 | 87 | 112 | 80 | 105 | 131 |
| Example 4 | 59 | 76 | 95 | 81 | 104 | 128 | 98 | 126 | 154 |
| Example 7 | 45 | 65 | 87 | 68 | 90 | 119 | 90 | 113 | 140 |
| Example 8 | 56 | 73 | 90 | 75 | 98 | 123 | 92 | 115 | 143 |
| Example 9 | 30 | 55 | 67 | 53 | 72 | 91 | 71 | 89 | 105 |

As shown in Table 3, the fuel cells of Examples 4, 7, and 8 respectively including a 5µm-, a 1µm- and a 10µm-thick gold coating layer produced higher power than that of Comparative Example 1. However, the fuel cell of Example 9 including a 20µm-thick gold coating layer produced somewhat lower power than the fuel cells of Examples 4, 7, and 8. As a result, it is found that when a gold coating layer is formed to contact an anode catalyst, it should have an exemplary thickness ranging from about 1µm to about 10µm.

### Example 10

A fuel cell was fabricated by using a method substantially similar to that in Example 5, except that the gold coating layer was configured to be 1 µm thick.

### Example 11

A fuel cell was fabricated by using a method substantially similar to that in Example 5, except that the gold coating layer was configured to be 10µm thick. Then, the respective fuel cells according to Examples 10 and 11 were provided with 1M of methanol for operation. Their respective power densities were measured at 0.45V, 0.4V, and 0.35V and at temperatures of 50°C, 60°C, and 70°C. The results are provided in Table 4. The results of Comparative Example 1 and Example 5 are also provided in the same Table 4 for comparison.

**Table 4**

| Power density (mW/cm²) | 0.45V | | | 0.4V | | | 0.35V | | |
|---|---|---|---|---|---|---|---|---|---|
| | 50°C | 60°C | 70°C | 50°C | 60°C | 70°C | 50°C | 60°C | 70°C |
| Comparative Example 1 | 45 | 64 | 85 | 65 | 87 | 112 | 80 | 105 | 131 |
| Example 5 | 63 | 81 | 104 | 76 | 100 | 128 | 84 | 109 | 140 |
| Example 10 | 58 | 77 | 98 | 72 | 95 | 120 | 82 | 107 | 134 |
| Example 11 | 40 | 58 | 75 | 45 | 75 | 98 | 76 | 100 | 120 |

As shown in Table 3, the fuel cells of Examples 5 and 10 respectively including a 5µm- and a 1µm-thick gold coating layer produced higher power than that of Comparative Example 1. However, the fuel cell of Example 11 including a 10µm-thick gold coating layer produced somewhat lower power than the fuel cells of Examples 5 and 10. As a result, it is found that when a gold coating layer is formed to contact an anode catalyst, it should have an exemplary thickness ranging from about 1µm to about 5µm.

As described above, a membrane-electrode assembly for a fuel cell of embodiments of the present invention includes an electrode substrate with a gold layer to decrease electric resistance at an interface between a catalyst layer and the electrode substrate and also between the electrode substrate and a fuel and/or an oxidant. In addition, the gold layer has catalytic activity on the interface, and the gold layer thereby produces catalytic synergetic effects with the catalyst layer. Furthermore, as a catalyst and gold may have an increased area (or areas) of contact, high power can be produced in embodiments of the present invention.

While the invention has been described in connection with certain exemplary embodiments, it is to be understood by those skilled in the art that the invention is not limited to the disclosed embodiments, but, on the contrary, is intended to cover various modifications included within the scope of the appended claims.

## Claims

1. A membrane-electrode assembly for a fuel cell, the membrane-electrode assembly comprising a cathode (23) and an anode (21) facing each other, each of the cathode (23) and the anode (21) comprising an electrode substrate (24) and a catalyst layer (22) disposed on the electrode substrate (24) and a polymer electrolyte membrane (20) interposed between the anode (21) and the cathode (23), wherein at least one of the electrode substrate (24) of the anode (21) or the electrode substrate (24) of the cathode (23) comprises a layer of gold (30,30') disposed thereon, **characterised in that** the layer of gold (30,30') has a thickness ranging from 5µm to 10µm.

2. The membrane-electrode assembly of any preceding claim, wherein the at least one of the electrode substrate (24) of the anode (21) or the electrode substrate (24) of the cathode (23) comprises a layer of gold in an amount ranging from 0.01 to 5 wt%.

3. The membrane-electrode assembly of any preceding claim, wherein the anode (21) comprises the layer of gold (30), the catalyst layer (22), and the electrode substrate (24), the electrode substrate (24) of the anode (21) being disposed between the layer of gold (30) and the catalyst layer (22).

4. The membrane-electrode assembly of any of claims 1 to 3, wherein the anode (21) comprises the electrode substrate (24), the catalyst layer (22), and the layer of gold (30'), the layer of gold (30') being disposed between the electrode substrate (24) of the anode (21) and the catalyst layer (22).

5. The membrane-electrode assembly of any of claims 1 to 4, wherein the layer of gold (30,30') comprises a first layer of gold (30) and a second layer of gold (30'), and wherein the anode (21) comprises the electrode substrate (24), the first layer of gold (30) and the second layer of gold (30') disposed on respective surfaces of the electrode substrate (24) of the anode (21), and the catalyst layer (22), the catalyst layer (22) being disposed to contact the first layer of gold (30).

6. The membrane-electrode assembly of any of claims 1 to 4, wherein the cathode (23) comprises the electrode substrate (24), the catalyst layer (22), and the layer of gold (30,30'), the layer of gold (30,30') being disposed between the electrode substrate (24) of the cathode (23) and the catalyst layer (22).

7. The membrane-electrode assembly of any preceding claim, wherein the layer of gold (30,30') is disposed using a wet coating method and/or a physical coating method.

8. The membrane-electrode assembly of any preceding claim, wherein the substrate (24) comprises at least one material selected from the group consisting of carbon paper, carbon cloth, carbon felt, a metal cloth, and combinations thereof.

9. The membrane-electrode assembly of any preceding claim, wherein at least one of the catalyst layer (22) of the anode (21) or the catalyst layer (22) of the cathode (23) comprises one material selected from the group consisting of platinum, ruthenium, osmium, platinum-ruthenium alloys, platinum-osmium alloys, platinum-palladium alloys, platinum-M alloys, and combinations thereof, and wherein M comprises a transition element selected from the group consisting of Ga, Ti, V, Cr, Mn, Fe, Co, Ni, Cu, Zn, Sn, Mo, W, Rh, Ru, and combinations thereof.

10. The membrane-electrode assembly of claim 9, further comprising a carrier for supporting the at least one catalyst layer (22), wherein the carrier comprises a carbon-based material and/or an inorganic material.

11. The membrane-electrode assembly of any preceding claim, wherein the fuel cell is a direct oxidation fuel cell.

12. A fuel cell system including a membrane electrode assembly according to any preceding claim, the fuel cell system comprising an electricity generating element for generating electricity by fuel oxidation and oxidant reduction reactions, a fuel supplier for supplying a fuel to the electricity generating element, and an oxidant supplier for supplying an oxidant to the electricity generating element.

13. The fuel cell system of claim 12, wherein the fuel is a hydrocarbon fuel.

## Patentansprüche

1. Membran-Elektroden-Einheit für eine Brennstoffzelle, wobei die Membran-Elektroden-Einheit eine Kathode (23) und eine Anode (21) aufweist, die einander zugewandt sind, wobei die Kathode (23) und die Anode (21) jeweils ein Elektrodensubstrat (24) und eine auf dem Elektrodensubstrat (24) angeordnete Katalysatorschicht (22) sowie eine zwischen der Anode (21) und der Kathode (23) eingefugte Polymerelektrolytmembran (20) umfassen, wobei mindestens eines des Elektrodensubstrats (24) der Anode (21) oder des Elektrodensubstrats (24) der Kathode (23) eine darauf angeordnete Goldschicht (30, 30') aufweist,
**dadurch gekennzeichnet, dass**
die Goldschicht (30, 30') eine Dicke im Bereich von 5 µm bis 10 µm aufweist.

2. Membran-Elektroden-Einheit nach dem vorstehenden Anspruch, wobei das mindestens eine des Elektrodensubstrats (24) der Anode (21) oder des Elektrodensubstrats (24) der Kathode (23) eine Goldschicht (30, 30') in einer Menge im Bereich von 0,01 bis 10 Gew.-% aufweist

3. Membran-Elektroden-Einheit nach einem der vorstehenden Ansprüche, wobei die Anode (21) die Goldschicht (30), die Katalysatorschicht (22) und das Elektrodensubstrat (24) umfasst, wobei das Elektrodensubstrat (24) der Anode (21) zwischen der Goldschicht (30) und der Katalysatorschicht (22) angeordnet ist.

4. Membran-Elektroden-Einheit nach einem der Ansprüche 1 bis 3, wobei die Anode (21) das Elektrodensubstrat (24), die Katalysatorschicht (22) und die Goldschicht (30') umfasst, wobei die Goldschicht (30') zwischen dem Elektrodensubstrat (24) der Anode (21) und der Katalysatorschicht (22) angeordnet ist.

5. Membran-Elektroden-Einheit nach einem der Ansprüche 1 bis 4, wobei die Goldschicht (30, 30') eine erste Goldschicht (30) und eine zweite Goldschicht (30') aufweist, und wobei die Anode (21) das Elektrodensubstrat (24), die auf entsprechenden Flächen des Elektrodensubstrats (24) der Anode (21) angeordnete erste Goldschicht (30) und zweite Goldschicht (30') sowie die Katalysatorschicht (22) umfasst, wobei die Katalysatorschicht (22) zur Kontaktierung der ersten Goldschicht (30) angeordnet ist

6. Membran-Elektroden-Einheit nach einem der Ansprüche 1 bis 4, wobei die Kathode (23) das Elektrodensubstrat (24), die Katalysatorschicht (22) und die Goldschicht (30, 30') umfasst, wobei die Goldschicht (30, 30' zwischen dem Elektrodensubstrat (24) der Kathode (23) und der Katalysatorschicht (22) angeordnet ist.

7. Membran-Elektroden-Einheit nach einem der vorstehenden Ansprüche, wobei die Goldschicht (30, 30') unter Anwendung eines Nassbeschichtungsverfahrens und/oder eines physikalischen Beschichtungsverfahrens aufgebracht wird.

8. Membran-Elektroden-Einheit nach einem der vorstehenden Anspruche, wobei das Substrat (24) mindestens ein Material ausgewählt aus der Gruppe bestehend aus Kohlepapier, Kohletuch, Kohlefilz, einem Metalltuch und Kombinationen hiervon umfasst.

9. Membran-Elektroden-Einheit nach einem der vorstehenden Anspruche, wobei mindestens eine der Katalysatorschicht (22) der Anode (21) oder der Katalysatorschicht (22) der Kathode (23) ein Material ausgewählt aus der Gruppe bestehend aus Platin, Ruthenium, Osmium, Platin-Ruthenium-Legierungen, Platin-Osmium-Legierungen, Platin-Palladium-Legierungen, Platin-M-Legierungen und Kombinationen hiervon umfasst, und wobei M ein Übergangselement ausgewählt aus der Gruppe bestehend aus Ga, Ti, V, Cr, Mn, Fe, Co, Ni, Cu, Zn, Sn, Mo, W, Rh, Ru und Kombinationen hiervon umfasst.

10. Membran-Elektroden-Einheit nach Anspruch 9, ferner umfassend einen Träger zum Tragen der mindestens einen Katalysatorschicht (22), wobei der Träger ein kohlenstoffbasiertes Material und/oder ein anorganisches Material umfasst.

11. Membran-Elektroden-Einheit nach einem der vorstehenden Anspruche, wobei die Brennstoffzelle eine Direktoxidation-Brennstoffzelle ist.

12. Brennstoffzellensystem enthaltend eine Membran-Elektroden-Einheit nach einem der vorstehenden Ansprüche, wobei das Brennstoffzellensystem ein Elektrizität erzeugendes Element zum Erzeugen von Elektrizität durch Brennstoffoxidation und Oxidationsmittelreduktionsreaktionen, eine Brennstoffzuführung zum Zuführen eines Brennstoffs an das Elektrizität erzeugende Element sowie eine Oxidationsmittelzuführung zum Zuführen eines Oxidationsmittels an das Elektrizität erzeugende Element umfasst

13. Brennstoffzellensystem nach Anspruch 12, wobei der Brennstoff ein Kohlenwasserstoffbrennstoff ist.

## Revendications

1. Ensemble membrane-électrodes pour une pile à combustible, l'ensemble membrane-électrodes comprenant une cathode (23) et une anode (21) l'une en face de l'autre, chacune de la cathode (23) et de l'anode (21) comprenant un substrat d'électrode (24) et une couche de catalyseur (22) disposée sur le substrat d'électrode (24) et une membrane (20) à électrolyte polymère interposée entre l'anode (21) et la cathode (23), dans lequel au moins l'un du substrat d'électrode (24) de l'anode (21) ou du substrat d'électrode (24) de la cathode (23) comprend une couche d'or (30, 30') disposée dessus, **caractérisé en ce que** la couche d'or (30, 30') présente une épaisseur allant de 5 µm à 10 µm.

2. Ensemble membrane-électrodes de l'une des revendications précédentes, dans lequel l'au moins un du substrat d'électrode (24) de l'anode (21) ou du substrat d'électrode (24) de la cathode (23) comprend une couche d'or en une quantité allant de 0,01 à 5 % en poids.

3. Ensemble membrane-électrodes de l'une des revendications précédentes, dans lequel l'anode (21) comprend la couche d'or (30), la couche de catalyseur (22), et le substrat d'électrode (24), le substrat d'électrode (24) de l'anode (21) étant disposé entre la couche d'or (30) et la couche de catalyseur (22).

4. Ensemble membrane-électrodes de l'une quelconque des revendications 1 à 3, dans lequel l'anode (21) comprend le substrat d'électrode (24), la couche de catalyseur (22), et la couche d'or (30'), la couche d'or (30') étant disposée entre le substrat d'électrode (24) de l'anode (21) et la couche de catalyseur (22).

5. Ensemble membrane-électrodes de l'une des revendications 1 à 4, dans lequel la couche d'or (30, 30') comprend une première couche d'or (30) et une deuxième couche d'or (30'), et dans lequel l'anode (21) comprend le substrat d'électrode (24), la première couche d'or (30) et la deuxième couche d'or (30') disposées sur des surfaces respectives du substrat d'électrode (24) de l'anode (21) et la couche de catalyseur (22), la couche de catalyseur (22) étant disposée pour entrer en contact avec la première couche d'or (30).

6. Ensemble membrane-électrodes de l'une des revendications 1 à 4, dans lequel la cathode (23) comprend le substrat d'électrode (24), la couche de catalyseur (22), et la couche d'or (30, 30'), la couche d'or (30, 30') étant disposée entre le substrat d'électrode (24) de la cathode (23) et la couche de catalyseur (22).

7. Ensemble membrane-électrodes de l'une des revendications précédentes, dans lequel la couche d'or (30, 30') est disposée en utilisant un procédé de revêtement par voie humide et/ou un procédé de revêtement physique.

8. Ensemble membrane-électrodes de l'une des revendications précédentes, dans lequel le substrat (24) comprend au moins un matériau choisi du groupe constitué de papier carbone, de tissu de carbone, de feutre de carbone, de tissu métallique, et leurs combinaisons.

9. Ensemble membrane-électrodes de l'une des revendications précédentes, dans lequel au moins l'une de la couche de catalyseur (22) de l'anode (21) ou de la couche de catalyseur (22) de la cathode (23) comprend un matériau choisi du groupe constitué du platine, du ruthénium, de l'osmium, des alliages platine-ruthénium, des alliages platine-osmium, des alliages platine-palladium, des alliages platine-M, et leurs combinaisons, et dans lequel M comprend un élément de transition choisi du groupe constitué de Ga, Ti, V, Cr, Mn, Fe, Co, Ni, Cu, Zn, Sn, Mo, W, Rh, Ru, et leurs combinaisons.

10. Ensemble membrane-électrodes de la revendication 9, comprenant en outre un support destiné à supporter l'au moins une couche de catalyseur (22), dans lequel le support comprend un matériau carboné et/ou un matériau inorganique.

11. Ensemble membrane-électrodes de l'une des revendications précédentes, dans lequel la pile à combustible est une pile à combustible à oxydation directe.

12. Système de pile à combustible comportant un ensemble membrane-électrodes selon l'une des revendications précédentes, le système de pile à combustible comprenant un élément de génération d'électricité destiné à générer de l'électricité par l'oxydation du combustible et des réactions de réduction d'oxydant, un élément d'alimentation en combustible destiné à alimenter l'élément de génération d'électricité en combustible, et un élément d'alimentation en oxydant destiné à alimenter l'élément de génération d'électricité en oxydant.

13. Système de pile à combustible de la revendication 12, dans lequel le combustible est un hydrocarbure.
